# EUROPEAN PATENT SPECIFICATION

(11) **EP 1 572 432 B1**
(45) Date of publication and mention of the grant of the patent: **09.06.2010**
(21) Application number: 03781256.7
(22) Date of filing: 18.12.2003
(51) Int. Cl.: B29C 44/34

(54) **METHOD AND DEVICE FOR PRE-EXPANDING THERMOPLASTIC MICROSPHERES**
VERFAHREN UND VORRICHTUNG ZUM VORSCHÄUMEN VON THERMOPLASTISCHEN MIKROKUGELN
PROCEDE ET DISPOSITIF POUR LA PRE-EXPANSION DES MICROSPHERES THERMOPLASTIQUES

(30) Priority: 20.12.2002 EP 02445192
(43) Date of publication of application: 14.09.2005
(73) Proprietor: Akzo Nobel N.V., 6800 SB Arnhem (NL)
(72) Inventor: SVEDBERG, Lars-Olof, S-862 34 KVISSLEBY (SE); HOVLAND, Guy, S-862 95 NJURUNDA (SE); HOLMLUND, Thomas, S-854 68 SUNDSVALL (SE)
(74) Representative: Schalkwijk, Pieter Cornelis
(86) International application number: PCT/SE2003/002043
(87) International publication number: WO 2004/056549

(56) References cited:
- WO-A-92/20465
- FR-A- 2 699 089
- US-A- 3 804 378
- US-A- 3 808 701
- US-A- 4 379 106
- US-A- 5 228 775
- DATABASE WPI Section Ch, Week 198932 Derwent Publications Ltd., London, GB; Class A32, AN 1989-232728 XP002239101 & SE 8 703 979 A (CASCO NOBEL AB) 14 April 1989 (1989-04-14)
- PATENT ABSTRACTS OF JAPAN vol. 005, no. 006 (M-050), 16 January 1981 (1981-01-16) & JP 55 137928 A (KANEGAFUCHI CHEM IND CO LTD), 28 October 1980 (1980-10-28)

## Description

The present invention relates to a method according to claim 1 and an expansion device, or preparing expanded thermoplastic microspheres according to claim 15.

Thermally expandable microspheres are known in the art and described in detail in, for example, US Patent No. 3615972, EP 486080, EP 566367 and EP 1 067 151, which documents hereby are incorporated by reference. In such microspheres, a propellant is encapsulated within a thermoplastic shell. Upon heating, the propellant evaporate to increase the internal pressure, at the same time as the shell softens, resulting in significant expansion of the microspheres, normally from about 2 to about 5 times their diameter.

Thermoplastic microspheres can be used in various applications as unexpanded or pre-expanded. Examples of applications for expanded microspheres are solvent based resins, like polyester, for dry spheres, and water based application systems, like paint, for wet spheres.

Full expansion of thermoplastic microspheres may lead to problems with agglomeration due to the higher temperature needed for full expansion, in combination with the thin thermoplastic shell which results from the expansion. There is a need for providing a method and an expansion device for preparing expanded thermoplastic microspheres, where the degree of expansion can be controlled in order to have the possibility to provide different densities of expanded microspheres. There is also a need for a method and an expansion device for expanding thermoplastic microspheres, which is simple and requires small space, which is comparatively inexpensive, and which is easily used by the end-users, at the place where expanded microspheres are to be used, thereby saving transport volumes and costs.

EP 0 348 372 discloses a process for preparation of expanded thermoplastic microspheres where the expansion takes place on a conveyor belt. The process works well but takes up considerable space and is comparatively expensive.

US Patent No. 4,722,943 and US Patent No. 5,342,689 describe methods for expanding microspheres where microspheres are mixed with a surface barrier coating to prevent agglomeration during a drying step. However, the amount of processing aid, such as talc, is very high which affects the possibilities of fast cooling. This causes difficulties in controlling the degree of expansion of the microspheres.

WO-A-9220465 describes a method of making microspheres substantially free of water comprising combining expandable thermoplastic microspheres and a surface barrier liquid and subjecting the resulting mixture to high shear mixing sufficient to disrupt or prevent the formation of agglomerates and concurrently heating the admixture for a time and temperature sufficient to remove substantially all water from the microspheres. Optionally the mixture may be heated to a temperature sufficient to expand the microspheres. The process may be conducted in a plow mixer.

It is an object of the present invention to provide a method of preparing expanded thermoplastic microspheres, which can be made in small equipment, which gives minimum of dust problems, which gives minimum of agglomeration, where the degree of expansion of the microspheres can be more easily controlled than before, and which also gives a possibility to continuously producing a product of expanded microspheres having a narrow density distribution. It is a further object of the present invention to provide an expansion device for preparing expanded thermoplastic microspheres, suitable for the above-mentioned method.

According to the invention it has surprisingly been found to achieve the above mentioned objects by a method according to claim 1.

The invention further concerns an expansion device according to claim 15.

The method and the expansion device allow for a continuous production of expanded thermoplastic microspheres.

The one or more scrapers, or a surface layer of the one or more scrapers, are/is suitably made of a polymeric material, preferably a heat-resistant polymeric material. The polymeric material is preferably a fluoroplastic material, such as PTFE, PVDF, PFA or FEP. If the polymeric material is a thermoplastic, the melting point of the polymeric material is suitably above about 200°C, preferably above 250°C.

Preferably, the one or more scrapers are at least partly in contact with the inner surface of the hollow body. The one or more scrapers suitably have certain flexibility so that the one or more scrapers, when pressed against the inner surface of the hollow body, will provide a tight contact between the one or more scrapers and the inner surface of the hollow body.

The hollow body is suitably provided with one or more heaters. The heaters are suitably jacket heaters. The feeding means itself is also suitably provided with one or more heaters.

The thermally expandable microspheres are suitably transported to the inlet of the expansion device by using a screw feeder, which can be provided with heaters.

The thermally expandable microspheres are suitably pre-mixed, before entering the expansion device, with a filler preventing agglomeration of the microspheres. The filler is suitably in the form of fine particles having a particle diameter range from about 1·10⁻⁹ to about 1·10⁻³ m, preferably from about 1·10⁻⁸ to about 3·10⁻⁵ m. Examples of fillers are inorganic compounds such as: aluminium powder, magnesium carbonate, magnesium phosphates, magnesium hydroxide, dolomite, calcium carbonate, calcium phosphates, calcium sulphate, talc, kaolin, silicon oxides, iron oxides, titanium oxide, aluminium oxides and hydroxides, zinc oxide, hydrotalcite, mica, barytes, glass spheres, fly ash, fine sand, mineral fibres and generally reinforcing fibres, wollastonite, feldspars, diatomaceous earth, pearlites, vermicullites, hollow quartz and ceramic spheres. Also organic compounds may be used, especially polymers with a sufficient high softening temperature, and cellulose, wood flour, carbon black, carbon fibres and graphite fibres. Preferably, the filler is a silicon oxide such as silicon dioxide. The filler may be used in its pure form or it may be surface treated in different ways in order to increase the agglomerate preventing effect. One way of surface treating the filler is to make it hydrophobic. The weight ratio added filler to microspheres is depending on which filler is used, but is suitably from about 1:1000 to about 5:1, preferably from about 1:500 to about 1:1, even more preferably from about 1:100 to about 1:3, and most preferably from about 1:25 to about 1:5.

The method and the expansion device according to the invention can be used for all known kinds of expandable thermoplastic microspheres, such as those marketed under the trademark Expancel®. Suitable microspheres may have a thermoplastic shell made from polymers or co-polymers obtainable by polymerizing various ethylenically unsaturated monomers which can be nitrile containing monomers such as acrylo nitrile, methacrylo nitrile, α-chloroacrylo nitrile, α-ethoxyacrylo nitrile, fumaro nitrile, croto nitrile, acrylic esters such as methylacrylate or ethyl acrylate, methacrylic esters such as methyl methacrylate, isobornyl methacrylate or ethyl methacrylate, vinyl halides such as vinyl chloride, vinylidene halides such as vinylidene chloride, vinyl pyridine, vinyl esters such as vinyl acetate, styrenes such as styrene, halogenated styrenes or α-methyl styrene, or dienes such as butadiene, isoprene and chloroprene. Any mixtures of the above mentioned monomers may also be used. It may sometimes be desirable that the monomers for the polymer shell also comprise crosslinking multifunctional monomers, such as one or more of divinyl benzene, ethylene glycol di(meth)acrylate, diethylene glycol di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, pentaerythritol hexa(meth)acrylate, dimethylol tricyclodecane di(meth)acrylate, triallylformal tri(meth)acrylate, allyl methacrylate, trimethylol propane tri(meth)acrylate, trimethylol propane triacrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate, triallyl isocyanurate etc. If present, such crosslinking monomers preferably constitute from about 0.1 to about 1 wt%, most preferably from about 0.2 to about 0.5 wt% of the total amounts of monomers for the polymer shell. Preferably the polymer shell constitutes from about 60 to about 95 wt%, most preferably from about 75 to about 85 wt% of the total microsphere.

The propellant in a microsphere is normally a liquid having a boiling temperature not higher than the softening temperature of the thermoplastic polymer shell. The propellant, also called the blowing agent or foaming agent, can be hydrocarbons such as n-pentane, isopentane, neopentane, butane, isobutane, hexane, isohexane, neohexane, heptane, isoheptane, octane and isooctane, or mixtures thereof. Also, other hydrocarbon types can also be used, such as petroleum ether, and chlorinated or fluorinated hydrocarbons, such as methyl chloride, methylene chloride, dichloro ethane, dichloro ethylene, trichloro ethane, trichloro ethylene, trichlorofluoro methane etc. The propellant suitably makes up from about 5 to about 40 weight % of the microsphere.

The temperature at which the expansion of the microspheres starts is called Tₛₜₐᵣₜ, while the temperature at which maximum expansion is reached is called Tₘₐₓ, both determined at a temperature increase rate of 20°C per minute. The thermally expandable microspheres used in the present invention suitably have a Tₛₜₐᵣₜ of from about 20 to about 200°C, preferably from about 40 to about 180°C, most preferably from about 60 to about 150°C. The thermally expandable microspheres used in the present invention suitably have a Tₘₐₓ of from about 50 to about 300°C, preferably from about 100 to about 250°C, most preferably from about 140 to about 200°C.

The volume weighted average particle size of the thermally expandable microspheres, according to the invention, is suitably from about 1 to about 500 µm, preferably from about 3 to about 100 µm, most preferably from about 5 to about 50 µm. By heating to a temperature above Tₛₜₐᵣₜ, it is normally possible to expand the microspheres from about 2 to about 7 times, preferably from about 4 to about 7 times, their diameter.

The density of the microspheres discharged is controlled by choosing a suitable heating temperature and/or length of time during which the microspheres are present in the expansion device. The temperature in the expansion device is suitably above Tₛₜₐᵣₜ, preferably 5 to 150°C above Tₛₜₐᵣₜ, most preferably 20 to 50°C above Tₛₜₐᵣₜ. The average residence time of the microspheres in the expansion device is from about 5 to about 200 s, preferably from about 10 to about 100 s, most preferably from about 30 to about 90 s.

Both wet and dry thermally expandable microspheres can be used in the method according to the invention. However, the method according to the invention is especially suitable for thermally expandable microspheres having a low wet content. Suitably, the thermally expandable microspheres have a dry solids content of more than about 50 weight %, preferably more than about 80 weight %, most preferably more than about 97 weight %.

The rate of rotation of the feeding means is suitably from about 1 to about 100 r.p.m., preferably from about 5 to about 90 r.p.m., most preferably from about 40 to about 80 r.p.m.

The one or more scrapers are suitably mounted on the feeding means and suitably extend radially beyond the outer radius of the feeding means towards the inner surface of the hollow body. Furthermore, the one or more scrapers suitably extend longitudinally in the feeding direction. The one or more scrapers are suitably mounted so that the scrapers, alone, or in combination, effect a scraping of from about 1 to about 100 % of the longitudinal length of the inner surface of the hollow body, preferably from about 10 to about 100 %, most preferably from about 20 to about 95 %. The scrapers can be of different individual length. For example, there may be a combination of one or more long scrapers and one or more short scrapers. Preferably, one or two scrapers effecting a scraping of from about 70 to about 100 % of the longitudinal length of the inner surface of the hollow body is used together with 1 to 5, preferably 2 to 4, scrapers effecting a scraping of from about 10 to about 40 % of the longitudinal length of the inner surface of the hollow body. If too many long scrapers are used, there is a risk of clogging of microspheres within the screw, especially if the screw pitch is low. Suitably, the length of the scrapers are adjusted to be the most suitable depending on other process parameters such as dimension of the expansion device, rate of rotation, microsphere type, filler content etc.

In some cases, for example at weight ratios of added filler to microspheres of from about 1:100 to about 1:10, the scrapers effect a scraping of from about 20 to about 60 % of the longitudinal length of the inner surface of the hollow body. In other cases, for example at weight ratios of added filler to microspheres of from about 1:10 to about 1:3, the scrapers effect a scraping of from about 50 to about 100 % of the longitudinal length of the inner surface of the hollow body.

The number of scrapers mounted on the feeding means is suitably from 1 to 6, preferably from 2 to 4.

The scraping movement can be made at any part of the inner surface of the hollow body. Suitably, the one or more scrapers are mounted on the feeding means starting at the inlet side of the expansion device, i.e. where the unexpanded microspheres are added, and extending therefrom.

In a preferred embodiment of the present invention, the feeding means is in the form of a screw. The screw has suitably a pitch to diameter ratio of from about 0.05 to about 1.5, preferably from about 0.15 to about 0.5. The pitch of the screw is suitably lower at the beginning of the screw, i.e. near the inlet, than at the end of the screw. The pitch can be gradually increasing along the screw. Alternatively, the pitch can be increasing in discrete steps, so that one portion of the screw has a different pitch than another portion of the screw.

In another preferred embodiment of the invention, the feeding means is in the form of one or more paddles, suitably protruding from a central core. The paddles are suitably arranged so that their projected angle (α) against the feeding direction is 0°< α < 90°, preferably from about 10° to about 60°.

By the method and an expansion device according to the invention, an easier way of expanding thermally expandable microspheres is provided requiring small equipment and reducing transport costs of expanded microspheres. The degree of expansion of the microspheres can also be more easily controlled than before.

### Brief description of the drawings

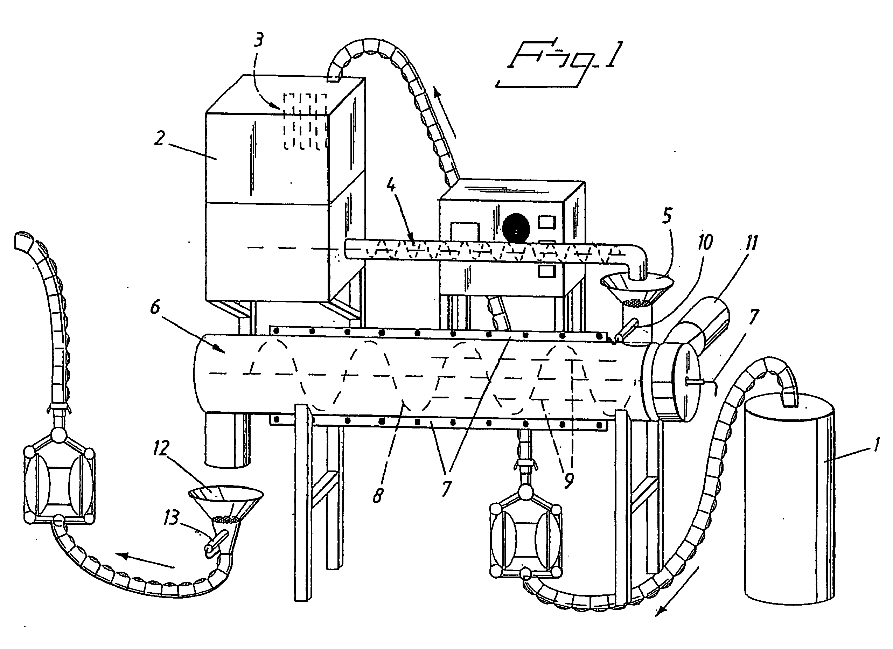

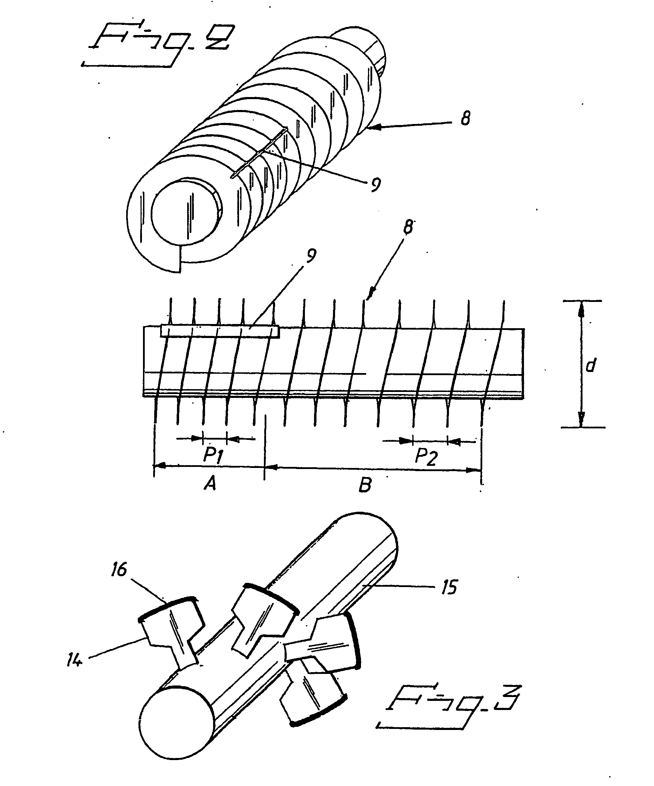

Figure 1 shows an embodiment of the present invention wherein the feeding means is a screw. Figure 2 shows feeding means being of a screw-type, and figure 3 shows feeding means being of a paddle-type.

### Detailed description of the drawings

Figure 1 shows an embodiment of the method where the unexpanded thermoplastic microspheres are pumped from a storage tank 1 into a silo 2 and filtered through a filter 3. Thereafter, the microspheres are being fed into a first screw feeder 4 and transported to an inlet 5 of an expansion device 6 comprising heating means 7, and a screw 8 with mounted scrapers 9. The inlet 5 is provided with a vibrator 10 and the screw is suitably connected to a motor 11. Expanded microspheres are suitably discharged through an outlet 12, provided with a vibrator 13, and suitably pumped away.
Figure 2 shows the screw 8 with a mounted scraper 9, and having the diameter d. One portion A of the screw has a pitch p₁ and another portion B of the screw has a different pitch p₂.
Figure 3 shows an embodiment of the feeding means in the form of paddles 14 protruding from a central core 15. The paddles are provided with scrapers 16. Each paddle has an angle α against the feeding direction. Different paddles may have different angles α. The feeding means described in figure 3 can substitute the screw in figure 1.

The benefits of the present invention will now further be described in connection with the following examples which, however, should not be interpreted as limiting the scope of the invention.

### Examples

### Example 1:

An expansion device comprising a hollow body according to the present invention having a screw as feeding means is used for expanding thermoplastic expandable microspheres. The screw is 2200 mm long and its diameter 205 mm. The screw is divided into three sections of equal length each having a different screw pitch which is 40, 50 and 60 mm, starting at the inlet. The screw has 4 scrapers mounted of which one has a length corresponding to 90% of the length of the inner surface of the hollow body, and the three other scrapers each have a length corresponding to 25% of the same. The rotational speed of the screw is 54 r.p.m. Microspheres of the type Expancel® 461 DU having a volume weighted average particle size of 12 µm, having Tₛₜₐᵣₜ = 99°C and Tₘₐₓ = 140°C, is pre-mixed with hydrophobic silicon dioxide in a relation 85 parts by weight microspheres and 15 parts by weight silicon dioxide. Then the microsphere-mixture is charged into the expansion device. The residence time of the microspheres in the expansion device is 60 s.

14 kg/h of expanded microspheres of even density can be discharged. There is no significant agglomeration of microspheres in the screw.

## Claims

1. A method of preparing expanded thermoplastic microspheres, comprising charging thermally expandable microsphere into an expansion device (6) comprising rotating feeding means (8, 14) enveloped by a hollow body **characterised by**, that one or more scrapers (9, 16) prevent layers of microspheres being built-up in the expansion device, said scrapers (9, 16) being mounted on the feeding means (8, 14) and positioned between the outer radius of the feeding means (8, 14) and the inner surface of the hollow body, transporting the microspheres through the expansion device while increasing the temperature of the microspheres to achieve expansion thereof, and discharging the microspheres.

2. A method according to claim 1, wherein said one or more scrapers extend radially beyond the outer radius of the feeding means towards the inner surface of the hollow body.

3. A method according to any one of the claims 1-2, wherein said one or more scrapers, alone, or in combination, effect a scraping of from about 20 to about 95 % of the longitudinal length of the inner surface of the hollow body.

4. A method according to any one of the claims 1-3, wherein one or two scrapers effects a scraping of from about 70 to about 100 % of the longitudinal length of the inner surface of the hollow body and 2 to 4 scrapers effect a scraping of from about 10 to about 40 % of the longitudinal length of the inner surface of the hollow body.

5. A method according to any one of the claims 1-4, wherein said one or more scrapers are mounted to the feeding means starting at the inlet side of the expansion device and extending therefrom.

6. A method according to any one of the claims 1-5, wherein said one or more scrapers, or a surface layer of said one or more scrapers, are/is made of a fluoroplastic material.

7. A method according to any one of the claims 1-6, wherein the hollow body is provided with one or more heaters (7).

8. A method according to any one of the claims 1-7, wherein the feeding means is provided with one or more heaters (7).

9. A method according to any one of the claims 1-8, wherein the thermally expandable microspheres are pre-mixed, before entering the expansion device (6), with a filler preventing agglomeration of the microspheres.

10. A method according to claim 9, wherein the filler is silicon dioxide.

11. A method according to any one of the claims 9-10, wherein the weight ratio added filler to microspheres is from about 1:100 to about 1:3.

12. A method according to any one of the claims 1-11, wherein the thermally expandable microspheres have a dry solids content of more than about 97 weight %.

13. A method according to any one of the claims 1-12, wherein the feeding means is in the form of a screw (8).

14. A method according to any one of the claims 1-13, wherein the feeding means is in the form of one or more paddles (14) protruding from a central core (15).

15. An expansion device for preparing expanded thermoplastic microspheres comprising rotatable feeding means (8) enveloped by a hollow body **characterised by** that it has one or more scrapers (9, 16) with capability of preventing layers of microspheres being built-up in the expansion device, said scrapers (9, 16) being mounted on the feeding means (8, 14) and positioned between the outer radius of the feeding means (8, 14) and the inner surface of the hollow body.

16. An expansion device according to claim 15, wherein said one or more scrapers are mounted on the feeding means and extend radially beyond the outer radius of the feeding means towards the inner surface of the hollow body.

17. An expansion device according to any one of the claims 15-16, wherein said one or more scrapers, alone, or in combination, effect a scraping of from about 20 to about 95 % of the longitudinal length of the inner surface of the hollow body.

18. An expansion device according to any one of the claims 15-17, wherein one or two scrapers effects a scraping of from about 70 to about 100 % of the longitudinal length of the inner surface of the hollow body and 2 to 4 scrapers effect a scraping of from about 10 to about 40 % of the longitudinal length of the inner surface of the hollow body.

19. An expansion device according to any one of the claims 15-18, wherein said one or more scrapers are mounted to the feeding means starting at the inlet side of the expansion device and extending therefrom.

20. An expansion device according to any one of the claims 15-19, wherein said one or more scrapers, or a surface layer of said one or more scrapers, are/is made of a fluoroplastic material.

21. An expansion device according to any one of the claims 15-20, wherein the hollow body is provided with one or more heaters (7).

22. An expansion device according to any one of the claims 15-21, wherein the feeding means is provided with one or more heaters (7).

23. An expansion device according to any one of the claims 15-22, wherein the feeding means is in the form of a screw (8).

24. An expansion device according to any one of the claims 15-22, wherein the feeding means is in the form of one or more paddles (14) protruding from a central core (15).

## Patentansprüche

1. Verfahren zum Herstellen expandierter thermoplastischer Mikrokugeln, das das Laden thermisch expandierbarer Mikrokugeln in eine Expansionsvorrichtung (6) aufweist, die eine rotierende Zufuhreinrichtung (8, 14) aufweist, die durch einen Hohlkörper umgeben ist, **dadurch gekennzeichnet, daß** ein oder mehrere Schaber (9, 16) verhindern, daß sich Schichten von Mikrokugeln in der Expansionsvorrichtung aufbauen, wobei die Schaber (9, 16) an der Zufuhreinrichtung (8, 14) angebracht und zwischen dem Außenradius der Zufuhreinrichtung (8, 14) und der Innenfläche des Hohlkörpers angeordnet sind, die Mikrokugeln durch die Expansionsvorrichtung transportiert werden, während die Temperatur der Mikrokugeln erhöht wird, um deren Expansion zu erreichen, und die Mikrokugeln ausgestoßen werden.

2. Verfahren nach Anspruch 1, wobei sich der eine oder die mehreren Schaber radial über den Außenradius der Zufuhreinrichtung hinaus zur Innenfläche des Hohlkörpers erstrecken.

3. Verfahren nach einem der Ansprüche 1-2, wobei der eine oder die mehreren Schaber allein oder in Kombination ein Abschaben von etwa 20 bis etwa 95% der longitudinalen Länge der Innenfläche des Hohlkörpers bewirken.

4. Verfahren nach einem der Ansprüche 1-3, wobei ein oder zwei Schaber ein Abschaben von etwa 70 bis etwa 100% der longitudinalen Länge der Innenfläche des Hohlkörpers bewirken und 2 bis 4 Schaber ein Abschaben von etwa 10 bis etwa 40% der longitudinalen Länge der Innenfläche des Hohlkörpers bewirken.

5. Verfahren nach einem der Ansprüche 1-4, wobei der eine oder die mehreren Schaber an der Zufuhreinrichtung angebracht sind, wobei sie von der Einlaßseite der Expansionsvorrichtung ausgehen und sich davon erstrecken.

6. Verfahren nach einem der Ansprüche 1-5, wobei der eine oder die mehreren Schaber oder eine Oberflächenschicht des einen oder der mehreren Schaber aus einem Fluorkunststoff besteht/bestehen.

7. Verfahren nach einem der Ansprüche 1-6, wobei der Hohlkörper mit einer oder mehreren Heizvorrichtungen (7) versehen ist.

8. Verfahren nach einem der Ansprüche 1-7, wobei die Zufuhreinrichtung mit einer oder mehreren Heizvorrichtungen (7) versehen ist.

9. Verfahren nach einem der Ansprüche 1-8, wobei die thermisch expandierbaren Mikrokugeln, bevor sie in die Expansionsvorrichtung (6) eintreten, mit einem Füllmittel vorgemischt werden, das eine Agglomeration der Mikrokugeln verhindert.

10. Verfahren nach Anspruch 9, wobei das Füllmittel Siliziumdioxid ist.

11. Verfahren nach einem der Ansprüche 9-10, wobei das Gewichtsverhältnis des hinzugefügten Füllmittels zu den Mikrokugeln von etwa 1:100 bis etwa 1:3 beträgt.

12. Verfahren nach einem der Ansprüche 1-11, wobei die thermisch expandierbaren Mikrokugeln einen Trockensubstanzgehalt von mehr als etwa 97 Gew.% aufweisen.

13. Verfahren nach einem der Ansprüche 1-12, wobei die Zufuhreinrichtung in der Form einer Schnecke (8) vorliegt.

14. Verfahren nach einem der Ansprüche 1-13, wobei die Zufuhreinrichtung in der Form eines oder mehrerer Kratzeisen (14) vorliegt, die aus einem mittleren Kern (15) vorstehen.

15. Expansionsvorrichtung zur Herstellung expandierter thermoplastischer Mikrokugeln, die eine drehbare Zufuhreinrichtung (8) aufweist, die durch einen Hohlkörper umgeben ist, **dadurch gekennzeichnet, daß** sie einen oder mehrere Schaber (9, 16) mit der Fähigkeit aufweist, zu verhindern, daß sich Schichten von Mikrokugeln in der Expansionsvorrichtung aufbauen, wobei die Schaber (9, 16) an der Zufuhreinrichtung (8, 14) angebracht und zwischen dem Außenradius der Zufuhreinrichtung (8, 14) und der Innenfläche des Hohlkörpers angeordnet sind.

16. Expansionsvorrichtung nach Anspruch 15, wobei der eine oder die mehreren Schaber an der Zufuhreinrichtung angebracht sind und sich radial über den Außenradius der Zufuhreinrichtung hinaus zur Innenfläche des Hohlkörpers erstrecken.

17. Expansionsvorrichtung nach einem der Ansprüche 15-16, wobei der eine oder die mehreren Schaber, allein oder in Kombination, ein Abschaben von etwa 20 bis etwa 95% der longitudinalen Länge der Innenfläche des Hohlkörpers bewirken.

18. Expansionsvorrichtung nach einem der Ansprüche 15-17, wobei ein oder zwei Schaber ein Abschaben von etwa 70 bis etwa 100% der longitudinalen Länge der Innenfläche des Hohlkörpers bewirken und 2 bis 4 Schaber ein Abschaben von etwa 10 bis etwa 40% der longitudinalen Länge der Innenfläche des Hohlkörpers bewirken.

19. Expansionsvorrichtung nach einem der Ansprüche 15-18, wobei der eine oder die mehreren Schaber an der Zufuhreinrichtung angebracht sind, wobei sie von der Einlaßseite der Expansionsvorrichtung ausgehen und sich davon erstrecken.

20. Expansionsvorrichtung nach einem der Ansprüche 15-19, wobei der eine oder die mehreren Schaber oder eine Oberflächenschicht des einen oder der mehreren Schaber aus einem Fluorkunststoff besteht/bestehen.

21. Expansionsvorrichtung nach einem der Ansprüche 15-20, wobei der Hohlkörper mit einer oder mehreren Heizvorrichtungen (7) versehen ist.

22. Expansionsvorrichtung nach einem der Ansprüche 15-21, wobei die Zufuhreinrichtung mit einer oder mehreren Heizvorrichtungen (7) versehen ist.

23. Expansionsvorrichtung nach einem der Ansprüche 15-22, wobei die Zufuhreinrichtung in der Form einer Schnecke (8) vorliegt.

24. Expansionsvorrichtung nach einem der Ansprüche 15-22, wobei die Zufuhreinrichtung in der Form eines oder mehrerer Kratzeisen (14) vorliegt, die aus einem mittleren Kern (15) vorstehen.

## Revendications

1. Procédé de préparation de microsphères thermoplastiques expansées, comprenant le chargement des microsphères thermiquement expansibles dans un dispositif d'expansion (6) comprenant des moyens d'alimentation rotatifs (8, 14) enveloppés par un corps creux, **caractérisé en ce qu'**un ou plusieurs couteaux (9, 16) empêchent les couches de microsphères de se former dans le dispositif d'expansion, lesdits couteaux (9, 16) étant montés sur les moyens d'alimentation (8, 14) et positionnés entre le rayon extérieur des moyens d'alimentation (8, 14) et la surface interne du corps creux, le transport des microsphères à travers le dispositif d'expansion tout en augmentant la température des microsphères pour atteindre leur expansion, et le déchargement des microsphères.

2. Procédé selon la revendication 1, dans lequel lesdits un ou plusieurs couteaux s'étendent radialement au-delà du rayon extérieur des moyens d'alimentation vers la surface interne du corps creux.

3. Procédé selon l'une quelconque des revendications 1-2, dans lequel lesdits un ou plusieurs couteaux, seuls, ou en combinaison, effectuent un raclage d'environ 20 à environ 95 % de la longueur longitudinale de la surface interne du corps creux.

4. Procédé selon l'une quelconque des revendications 1-3, dans lequel un ou deux couteaux effectuent un raclage d'environ 70 à environ 100 % de la longueur longitudinale de la surface interne du corps creux et 2 à 4 couteaux effectuent un raclage d'environ 10 à environ 40 % de la longueur longitudinale de la surface interne du corps creux.

5. Procédé selon l'une quelconque des revendications 1-4, dans lequel lesdits un ou plusieurs couteaux sont montés dans le système d'alimentation en partant du côté entrée du dispositif d'expansion et en s'étendant depuis celui-ci.

6. Procédé selon l'une quelconque des revendications 1-5, dans lequel lesdits un ou plusieurs couteaux, ou une couche de surface dudit ou desdits couteaux, sont/est constitué(es) d'un matériau fluoroplastique.

7. Procédé selon l'une quelconque des revendications 1-6, dans lequel le corps creux est doté d'un ou plusieurs chauffages (7).

8. Procédé selon l'une quelconque des revendications 1-7, dans lequel les moyens d'alimentation sont dotés d'un ou plusieurs chauffages (7).

9. Procédé selon l'une quelconque des revendications 1-8, dans lequel les microsphères thermiquement expansibles sont pré-mélangées, avant d'entrer dans le dispositif d'expansion (6), avec une charge empêchant l'agglomération des microsphères.

10. Procédé selon la revendication 9, dans lequel la charge est un dioxyde de silicium.

11. Procédé selon l'une quelconque des revendications 9-10, dans lequel le rapport en poids de la charge ajoutée aux microsphères est d'environ 1 :100 à environ 1 :3.

12. Procédé selon l'une quelconque des revendications 1-11, dans lequel les microsphères thermiquement expansibles ont une teneur en solides secs supérieure à environ 97 % en poids.

13. Procédé selon l'une quelconque des revendications 1-12, dans lequel les moyens d'alimentation ont la forme d'une vis (8).

14. Procédé selon l'une quelconque des revendications 1-13, dans lequel les moyens d'alimentation ont la forme d'une ou plusieurs ailettes (14) saillant d'un noyau central (15).

15. Dispositif d'expansion pour préparer des microsphères thermoplastiques expansées comprenant des moyens d'alimentation rotatifs (8) enveloppés par un corps creux, **caractérisé en ce qu'**il dispose d'un ou plusieurs couteaux (9, 16) ayant la capacité d'empêcher que les couches de microsphères ne se forment dans le dispositif d'expansion, lesdits couteaux (9, 16) étant montés sur les moyens d'alimentation (8, 14) et positionnés entre le rayon extérieur des moyens d'alimentation (8, 14) et la surface interne du corps creux.

16. Dispositif d'expansion selon la revendication 15, dans lequel lesdits un ou plusieurs couteaux sont montés sur les moyens d'alimentation et s'étendent radialement au-delà du rayon extérieur des moyens d'alimentation vers la surface interne du corps creux.

17. Dispositif d'expansion selon l'une quelconque des revendications 15-16, dans lequel lesdits un ou plusieurs couteaux, seuls ou en combinaison, effectuent un raclage d'environ 20 à environ 95 % de la longueur longitudinale de la surface intérieure du corps creux.

18. Dispositif d'expansion selon l'une quelconque des revendications 15-17, dans lequel un ou deux couteaux effectuent un raclage d'environ 70 à environ 100 % de la longueur longitudinale de la surface interne du corps creux et 2 à 4 couteaux effectuent un raclage d'environ 10 à environ 40 % de la longueur longitudinale de la surface interne du corps creux.

19. Dispositif d'expansion selon l'une quelconque des revendications 15-18, dans lequel lesdits un ou plusieurs couteaux sont montés sur les moyens d'alimentation, en partant du côté entrée du dispositif d'expansion et en s'étendant depuis celui-ci.

20. Dispositif d'expansion selon l'une quelconque des revendications 15-19, dans lequel lesdits un ou plusieurs couteaux, ou une couche de surface dudit un ou plusieurs couteaux, sont/est constitué(es) d'un matériau fluoroplastique.

21. Dispositif d'expansion selon l'une quelconque des revendications 15-20, dans lequel le corps creux est doté d'un ou plusieurs chauffages (7).

22. Dispositif d'expansion selon l'une quelconque des revendications 15-21, dans lequel les moyens d'alimentation sont dotés d'un ou plusieurs chauffages (7).

23. Dispositif d'expansion selon l'une quelconque des revendications 15-22, dans lequel les moyens d'alimentation ont la forme d'une vis (8).

24. Dispositif d'expansion selon l'une quelconque des revendications 15-22, dans lequel les moyens d'alimentation ont la forme d'une ou plusieurs ailettes (14) saillant d'un noyau central (15).
